# EUROPEAN PATENT APPLICATION

(11) **EP 1 245 895 A1**
(43) Date of publication of application: **02.10.2002**
(21) Application number: 02076174.8
(22) Date of filing: 26.03.2002
(51) Int. Cl.: F16L 37/30

(54) **Valve with extraction means**

(30) Priority: 26.03.2001 NL 1017697
(71) Applicant: Solid Processing Systems Holding B.V., 7722 RS Dalfsen (NL)
(72) Inventor: Wolters, Laurentius Gerardus Johannes, 7131 GL Lichtenvoorde (NL)
(74) Representative: 't Jong, Bastiaan Jacobus

(57) **Abstract**

The invention relates to an assembly (1) for closing two openings, for instance of two containers (2,3), for coupling the openings and for placing the openings into communication, which assembly (1) comprises:
- a first valve part (7) for arranging on the first opening;
- a second valve part (8) for arranging on the second opening;
- coupling means (13,16) for coupling the two openings;
- a housing (17) which is arranged on one of the valve parts (7) and which encloses both valve parts while in the coupled state; and
- extraction means (6) connected to the housing (17) for extracting air (L) from the housing (17).

## Description

The invention relates to an assembly for closing two openings, for instance of two containers, for coupling the openings and for placing the openings into communication.

In for instance the manufacture of drugs substances are used which are extremely aggressive. Any contact therewith must be avoided at all times. So-called dividable valves are commercially available for this purpose, which consist of two valve parts which are each mounted on a container. In order to now transfer material from the one container to the other, the valve parts are placed against each other and subsequently coupled to each other, whereafter the assembly can be opened so that material can flow from the one container to the other container.

It has been found that in spite of this dividable construction there is still the possibility of particles entering the environment. This is possible on the one hand because particles are left behind on the abutting face between the two valve parts. There is on the other hand the possibility in the case of pressurized containers of a minimal quantity flowing through the seals during pressure equalization between the two containers, and of particles thus entering the environment. There is the further possibility that dust accumulates on a valve part and that, after coupling of the two valve parts, these dust particles result in the valve parts not lying properly against each other. Here too material can subsequently accumulate between the valve parts which is then released into the environment.

It is an object of the invention to alleviate or even prevent the above stated drawbacks.

This object is achieved with an assembly as according to the preamble, which assembly comprises:
- a first valve part for arranging on the first opening;
- a second valve part for arranging on the second opening;
- coupling means for coupling the two openings;
- a housing which is arranged on one of the valve parts and which encloses both valve parts while in the coupled state; and
- extraction means connected to the housing for extracting air from the housing.

Particles entering the environment are extracted immediately by the extraction means. Even when the valves have been moved very close to each other, an airflow with a very high speed is created between the two valve parts, whereby contaminants are extracted.

In a preferred embodiment of the invention extraction openings are arranged in the housing and a number of suction openings are arranged opposite the extraction openings such that in at least the uncoupled situation an airflow is formed over the surface of at least one of the valve parts, and in the coupled situation an airflow is formed flowing around the valve parts. When during filling material now leaks through the seals of the valve parts, these contaminants are entrained by the airflow flowing around the valve parts.

In another preferred embodiment of the invention the total surface area of the extraction openings is larger than the total surface area of the suction openings lying opposite. This ensures that a high flow speed is present which can entrain the contaminants.

Further suction openings are preferably arranged in the housing along the periphery of the valve parts. Airflow which keeps the valve parts free of particles hereby flows round the valve parts on all sides. Less accessible areas in which particles could accumulate are thus prevented.

According to yet another embodiment of the invention the coupling means form at least a part of the housing.

These and other features of the invention are further elucidated with reference to the annexed drawings.

Figure 1 is a perspective view of an assembly according to the invention.

Figure 2 shows the assembly according to figure 1 in the uncoupled state.

Figure 3 shows the assembly according to figure 1, wherein the two parts have been placed a short distance apart.

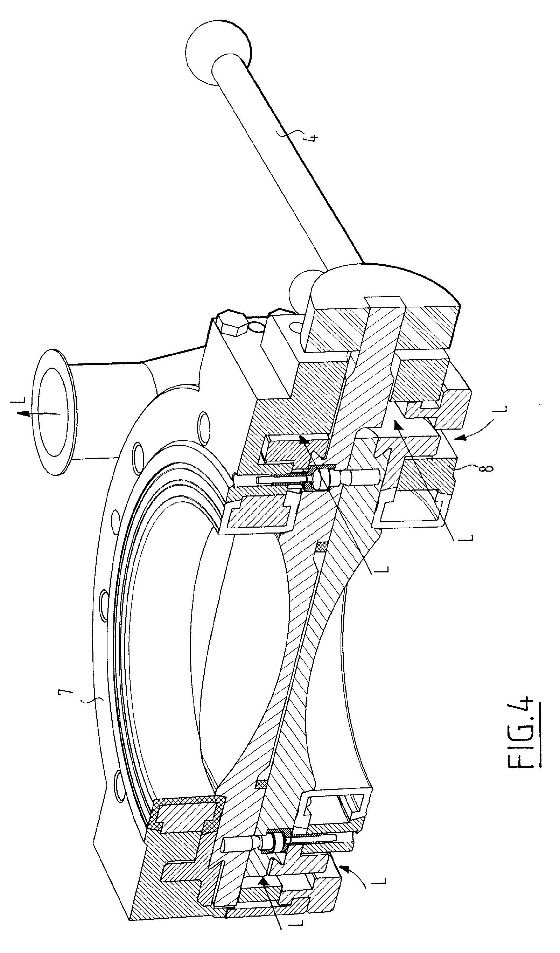

Figure 4 shows in perspective view a cross-section of the assembly in the coupled situation as according to figure 1.

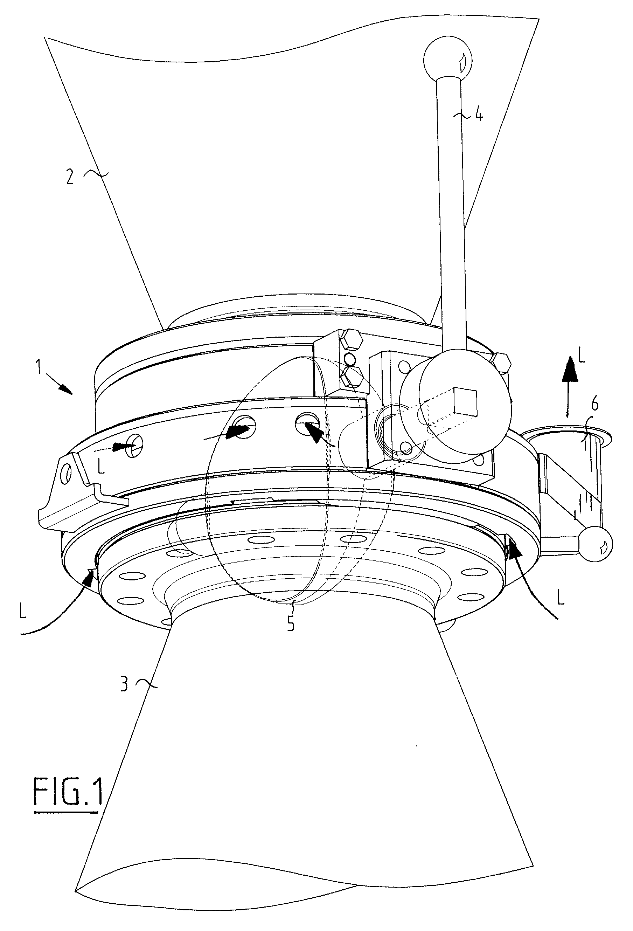

Figure 1 shows an assembly 1 placed between a first container 2 and a second container 3. Assembly 1 has a control lever 4 with which a valve 5 in assembly 1 can be operated. Arranged on assembly 1 is an extraction opening 6 with which air L can be drawn through assembly 1.

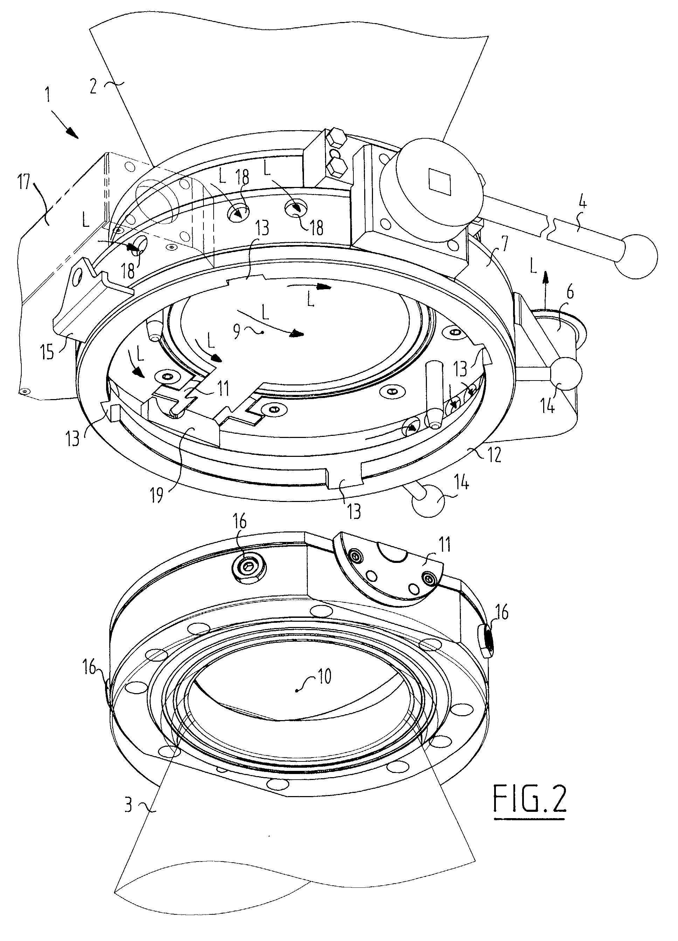

Figure 2 shows assembly 1 according to the invention in the uncoupled situation. This assembly 1 comprises an upper valve part 7 and a lower valve part 8. Each valve part 7,8 comprises respectively a valve plate 9, 10. These valve plates 9, 10 are mounted in bearings 11.

Arranged on upper valve part 7 is a bayonet ring 12 which can be operated by means of handles 14. In bayonet ring 12 are arranged recesses 13 through which can pass protrusions 16 arranged on lower valve part 8.

A housing part 17 is further arranged on upper valve part 7 diametrically opposite extraction opening 6. When air is now extracted via extraction opening 6, air L will then flow via housing part 17 into the assembly via openings 18 and brush along the upper valve plate 9. Possible contaminants are thus extracted.

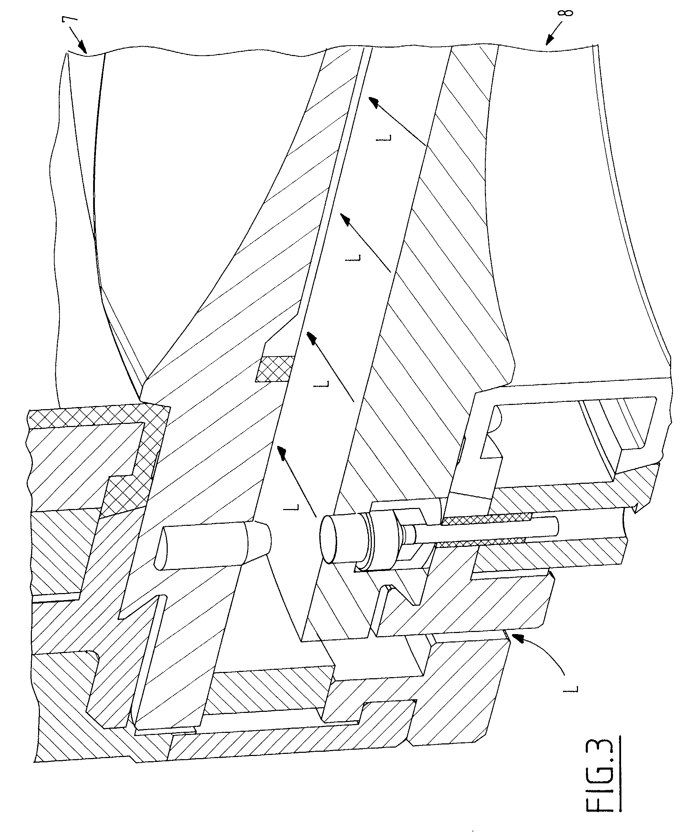

When the two valve parts 7,8 are now placed closer together (see figure 3), the space between the two valve parts 7,8 will then decrease, whereby the air speed of airflow L will increase. The cleaning action of the airflow will improve because of this increase in speed.

When the two valve parts 7,8 are now placed fully against each other, airflow L will now flow only around valve plates 9, 10. Air is further drawn in on the underside along the periphery of lower valve part 8.

Valve plates 9 and 10 are sealed by means of seals. When valve plates 9, 10 are now opened there is the risk of a minimal quantity of material flowing to the outside along these seals 22. This is particularly possible when a very high overpressure prevails in for instance the first container 2 while the second container 3 is under atmospheric pressure. During the pressure equalization when valve plates 9, 10 are opened there is the possibility of some material passing between the seals 22.

Since an airflow flowing from housing part 17 to extraction opening 6 is present around valve plates 9, 10, possible contaminants will be immediately extracted. This prevents harmful substances entering the environment.

When the valve is closed again and the two valve parts 7, 8 uncoupled, the airflow remains intact and will immediately extract possible contaminants.

## Claims

1. Assembly for closing two openings, for instance of two containers, for coupling the openings and for placing the openings into communication, which assembly comprises:
- a first valve part for arranging on the first opening;
- a second valve part for arranging on the second opening;
- coupling means for coupling the two openings;
- a housing which is arranged on one of the valve parts and which encloses both valve parts while in the coupled state; and
- extraction means connected to the housing for extracting air from the housing.

2. Assembly as claimed in claim 1, wherein extraction openings are arranged in the housing and a number of suction openings are arranged opposite the extraction openings such that in at least the uncoupled situation an airflow is formed over the surface of at least one of the valve parts and in the coupled situation an airflow is formed flowing around the valve parts.

3. Assembly as claimed in claim 2, wherein the total surface area of the extraction openings is larger than the total surface area of the suction openings lying opposite.

4. Assembly as claimed in any of the foregoing claims, wherein further suction openings are arranged in the housing along the periphery of the valve parts.

5. Assembly as claimed in any of the foregoing claims, wherein the coupling means form at least a part of the housing.
